# EUROPEAN PATENT APPLICATION

(11) **EP 1 649 971 A1**
(43) Date of publication of application: **26.04.2006**
(21) Application number: 04747836.7
(22) Date of filing: 15.07.2004
(51) Int. Cl.: B23P 17/00, C04B 41/72

(54) **DEVICE AND METHOD FOR HIGH-PRESSURE WATER JETTING SURFACE CUTTING**

(30) Priority: 17.07.2003 JP 2003198296
(71) Applicant: Availvs Corporation, Tokyo 102-0085 (JP)
(72) Inventor: SAKAI, Mieko, Chiyoda-ku, Tokyo 102-0085 (JP); SAITO, Kenichiro, Kisarazu-shi, Chiba 292-0043 (JP)
(74) Representative: Gordon, Kirsteen Helen
(86) International application number: PCT/JP2004/010447
(87) International publication number: WO 2005/007337

(57) **Abstract**

This invention provides a cutting device which includes a high pressure water jet nozzle head capable of being moved in X and Y directions while being rotated, and which cuts a resin matrix portion on a surface of a composite molded article consisting of inorganic particles and a resin by a high pressure water jet, wherein a plurality of high pressure water jet nozzles are arranged in the nozzle head, and high pressure water jet centers of at least one or more nozzles are arranged at inclined angles with respect to perpendicular positions to a foundation layer surface of the composite molded article. Even a resin matrix surface layer in an inclined portion of an irregular surface shape or a relief pattern can be effectively cut away.

## Description

### BACKGROUND OF THE INVENTION

### 1. Field of the Invention

The present invention relates to a high pressure water jet surface cutting device and a surface cutting method. More specifically, the present invention relates to a novel surface cutting device by means of a high pressure water jet useful for an irregular surface shape of a composite molded article to be used as a building material, e.g., an interior or an exterior wall material, a pavement, an artificial stone for a monument or the like, or useful for surface finishing of a relief pattern, and a surface cutting method using this novel surface cutting device.

### 2. Description of the Related Art

Conventionally, there are known composite molded articles made of a mixture of a resin component, a natural stone or its ground powders, and inorganic particles such as particles of a synthetic inorganic compound and similar to marble, an artificial stone similar to a natural stone, and the like. Various blending ratios of materials, various color tones, and various uses of these composite molded articles have been also proposed.

Normally, each of the composite molded articles is provided as a product by injecting the resin mixture into a molding die, hardening the resin mixture, and detaching the hardened resin mixture from the molding die. During the molding, an irregular shape or a relief pattern is added to a surface of the composite molded article so as to realize a texture of a natural stone or a three-dimension of the surface, or a shading depth.

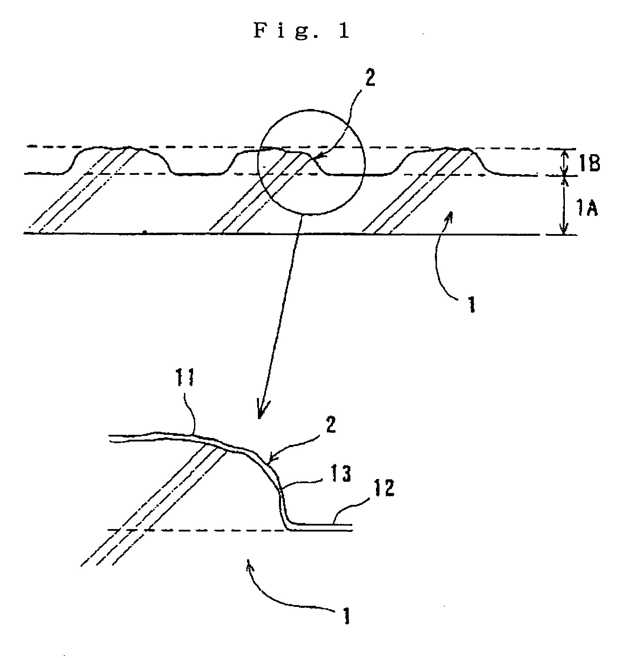

During the conventional molding of the composite article consisting of the artificial stone or the like, for example, a thin film resin matrix surface layer 2 as shown in Fig.1 is present on the surface of the composite molded article 1. Therefore, this resin matrix surface layer 2 is removed by the high pressure water jet, a dissolving treatment using chemicals or the like. This resin matrix surface layer 2 is formed, following cast molding using this molding die. If this resin matrix surface layer 2 is left, the surface of the composite molding article 1 inevitably gives a resin (plastic) texture. To prevent this, this resin matrix surface layer 2 is removed to thereby expose the natural stone powders and mineral particles contained in the composite molded article 1 consisting of the artificial stone or the like.

The dissolving treatment using chemicals casts a major burden on environment in terms of waste liquid or the like and is not, therefore, undesirable. In order to remove the resin matrix surface layer 2, it is considered to be practical to cut away the resin matrix surface layer 2 by the high pressure water jet that exhibits a good resin matrix surface layer removal effect.

Although this high pressure water jet is basically effective as cutting means for the resin matrix surface layer 2, it leaves much room for improvement for a surface finishing treatment to the composite molded article 1 at higher quality with a sense of high end. For the composite molded article 1 that has the irregular surface shape or the relief surface pattern as shown in Fig. 1, for example, the surface cutting in a vertex portion 11 and a flat portion 12 can be satisfactorily performed; however, the surface cutting in an inclined portion 13 is conventionally, unavoidably insufficient. Due to this, the resin matrix surface layer 2 is left in the inclined portion 13. As a result, it is disadvantageously difficult to provide a high-quality composite molded article that imparts a three-dimensional shading, a texture of a natural stone, an excellent design form, and a good aesthetic sense.

### SUMMARY OF THE INVENTION

It is, therefore, an object of the present invention to provide novel technical measures capable of solving the disadvantages of conventional surface cutting devices by means of a high pressure water jet, and effectively cutting away a resin matrix surface layer in an inclined portion of an irregular surface shape or a relief pattern.

According to the first aspect of the present invention, there is provided a high pressure water jet surface cutting device that comprises a high pressure water jet nozzle head which can be moved in X and Y directions while being rotated, and that cuts a resin matrix portion on a surface of a composite molded article consisting of inorganic particles and a resin, characterized in that a plurality of high pressure water jet nozzles are arranged on the nozzle head, high pressure water jet centers of at least one or more nozzles being arranged at inclined angles with respect to perpendicular positions to a foundation layer surface of the composite molded article, respectively.

According to the second aspect of the present invention, there is provided the high pressure water jet surface cutting device characterized in that the inclined angles of the at least one or more nozzles are within a range of 45°. According to the third aspect of the present invention, there is provided the high pressure water jet surface cutting device characterized in that the at least one or more nozzles arranged at the inclined angles are at orthogonal positions to a tangent of the nozzle head to be directed outward of a rotation center of the nozzle head or directed inward toward the rotation center. According to a fourth aspect of the present invention, there is provided the high pressure water jet surface cutting device characterized in that the at least one or more nozzles are arranged so that the jet centers are at perpendicular positions at the inclined angles of 0° with respect to the foundation layer surface.

According to the fifth aspect of the present invention, there is provided the high pressure water jet surface cutting device characterized in that the plurality of high pressure water jet nozzles are arranged at at least two or more circumferential positions having different distances from the rotation center of the nozzle head. According to the sixth aspect of the present invention, there is provided the high pressure water jet surface cutting device characterized in that the plurality of nozzles arranged at an equal circumferential position are arranged at symmetric positions about the rotation center of the nozzle head. According to the seventh aspect of the present invention, there is provided the high pressure water jet surface cutting device characterized in that the plurality of nozzles arranged at the equal circumferential position are arranged at the same inclined angle or equally perpendicularly, and form an equal arrangement angle with respect to a tangent. According to the eighth aspect of the present invention, there is provided the high pressure water jet surface cutting device characterized in that the nozzles arranged at a plurality of circumferential positions, respectively, differ in inclined angle.

According to a ninth aspect of the present invention, there is provided a surface cutting method using the surface cutting device according to any one of the first to the eighth aspects of the present invention, characterized by comprising a step of cutting the resin matrix portion on the surface of the composite molded article while moving the nozzle head in the X and Y directions so that areas among loci of the jet centers with respect to the foundation layer surface of the composite molded article against which a jet water from the nozzles is stricken are uniform. According to the tenth aspect of the present invention, there is provided the high pressure water jet surface cutting device characterized by comprising a step of cutting away the resin matrix portion having a thickness within a range of 10µm to 10 mm.
According to the eleventh aspect of the present invention, there is provided the high pressure water jet surface cutting device characterized by comprising a step of cutting the surface of the composite molded article that includes irregular surfaces having a height from the foundation layer surface within a range of 1 to 100 mm.

The invention according to the present invention constituted as stated above is completed based on the following new knowledge obtained as a result of detailed and specific studies conducted by the inventors of the present invention.

According to the studies of the inventors of the present invention, when the resin matrix surface layer 2 is cut by the conventional high pressure water jet, the number of jet nozzles provided on the rotary disk is increased and the number of revolutions (circumferential speed) of each nozzle is increased. By so increasing, the impact energy of the high pressure water, with which the high pressure water is stricken against the surface of the composite molded article 1, is uniformly distributed to the vertex portion 11, the flat portion 12, and the inclined portion 13. However, there is a limit to the removal of the resin matrix surface layer 2 in the inclined portion 13 by cutting. The same thing is true when the pressure of the jet water is increased. If the pressure is excessively increased, the vertex portion 11 and the flat portion 12 may possibly be damaged. By contrast, if the centers of the high pressure water jet nozzles are arranged at the inclined angles with respect to perpendicular positions to the foundation layer surface of the composite molded article 1, which is composed by the foundation layer portion 1A and an additional decoration portion 1B, as shown in Fig. 1, that is, at perpendicular positions to the flat portion 12, shown in Fig. 1, in place of the conventional jet nozzles that are arranged perpendicularly, that is, arranged so that the high pressure water can be stricken against the inclined portion 13 substantially perpendicularly, the resin matrix surface layer 2 in the inclined portion 13 can be satisfactorily cut away. It is also discovered from the studies that, if nozzles for injecting the high pressure water in a perpendicular direction to the foundation layer surface, i.e., the flat portion 12 are additionally provided, the resin matrix surface layer 2 in the vertex portion 11 and the flat portion 12 can be also, satisfactorily cut away. This cannot be predicted at all from the conventional knowledge and experience.

Thus, the present invention is completed based on this knowledge, and completed further by deepening this knowledge and considering most preferred embodiments.

### BRIEF DESCRIPTION OF THE DRAWINGS

Fig. 1 is a cross-sectional view and a partially enlarged view which show one example of a composite molded article;
Fig. 2 is a bottom view which shows a nozzle head;
Fig. 3 is a cross-sectional view taken along A-A of Fig. 2; and
Fig. 4 shows loci formed following rotational movement of the nozzle head.

### DETAILED DESCRIPTION OF THE PREFERRED EMBODIMENT

An embodiment of the present invention will be described hereinafter with reference to the drawings.

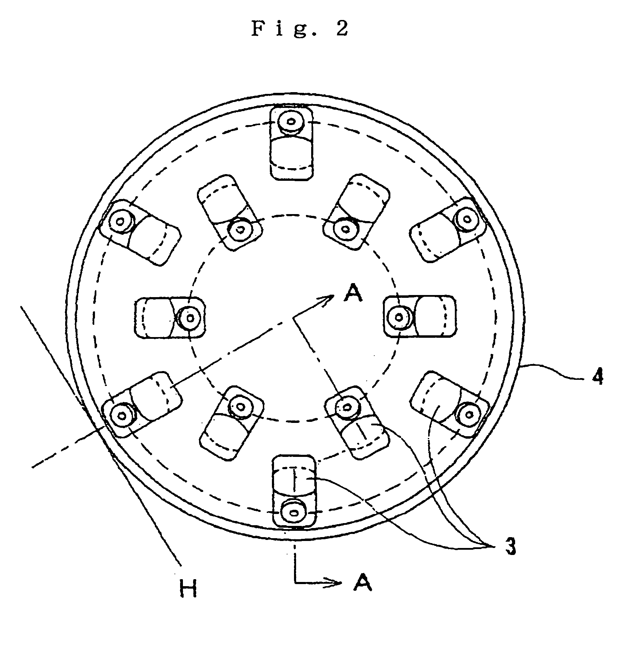

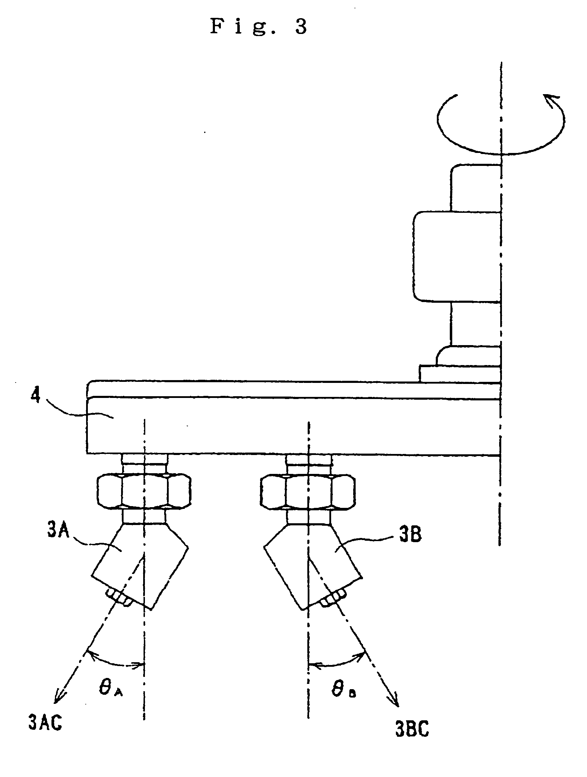

A high pressure water jet surface cutting device according to the present invention is characterized in that high pressure jet centers of at least one or more nozzles are located at inclined angles with respect to perpendicular positions. This feature can be embodied by, for example, Figs. 2 and 3.

Fig. 2 is a bottom view which shows an example of a state in which a plurality of high pressure water jet nozzles 3 are arranged on a rotary disk 4. Fig. 3 is a cross-sectional view taken along A-A of Fig. 2.

According to this embodiment, for example, in the high pressure water jet surface cutting device, a plurality of high pressure water jet nozzles 3 are arranged on the rotary disk 4 of the nozzle head. At least one or more nozzles 3., eg., high pressure water jet centers of at least one or more nozzles 3AC and 3BC of high pressure water jet nozzles 3A and 3B shown in Fig. 3 are arranged at inclined angles θ_{A} and θ_{B} with respect to perpendicular positions to a foundation layer surface of the composite molded article, respectively.

More specifically, the high pressure water jet nozzle 3A is arranged at the inclined angle θ_{A} while being radiated outward of the rotation center of the rotary disk 4. The high pressure water jet nozzle 3B is arranged at the inclined angle θ_{B} while being directed toward the rotation center thereof. The cutting device according to the present invention has preferably the inclined angles θ_{A} and θ_{B} within a range of 45°.

In the cutting device, each nozzle arranged at such an inclined angle may form an arbitrary angle within a range of 360°, e.g., an angle of 0°, with respect to, for example, a tangent H of the rotary disk 4 of the nozzle head as shown in Fig. 2 in plane arrangement. Figs. 2 and 3 depict, as a preferred embodiment, a specific example in which the nozzle 3A that forms an angle of +90° with respect to the tangent H, i.e., that is arranged at an orthogonal position to the tangent H while being radiated outward of the rotation center of the rotary disk 4, and in which the nozzle 3B that forms an angle of -90° with respect to the tangent H, i.e., that is arranged at an orthogonal position to the tangent H while being directed toward the rotation center thereof.

Actually, according to the present invention, the plural high pressure water jet nozzles 3 are preferably arranged at two or more circumferential positions at different distances from the rotation center of the rotary disk 4 of the nozzle head, the circumferential positions different in inclined angle. The nozzles 3 at the same circumferential position are preferably arranged symmetrically about the rotation center of the rotary disk 4, and at the same plane position with respect to the tangent H at the same inclined angle.

For instance, the surface cutting device that includes the nozzle head corresponding to the example of Figs. 2 and 3 and being constituted of such conditions that the rotary disk 4 has an outside diameter of 220 mm, a distance from the rotation center on an inner circumference shown in Fig. 2 is 175 mm, a distance from the rotation center on an outer circumference shown in Fig. 2 is 200 mm, a nozzle injection caliber is 0.2 mm, and that the inclined angles θ_{A} and θ_{B} are 20° is provided. Further, the surface cutting device in which circumferential positions of the two nozzles arranged at symmetric positions from the rotation center are divided to six stages of 160, 165, 175, 185, 190, and 200 mm, is specifically provided.

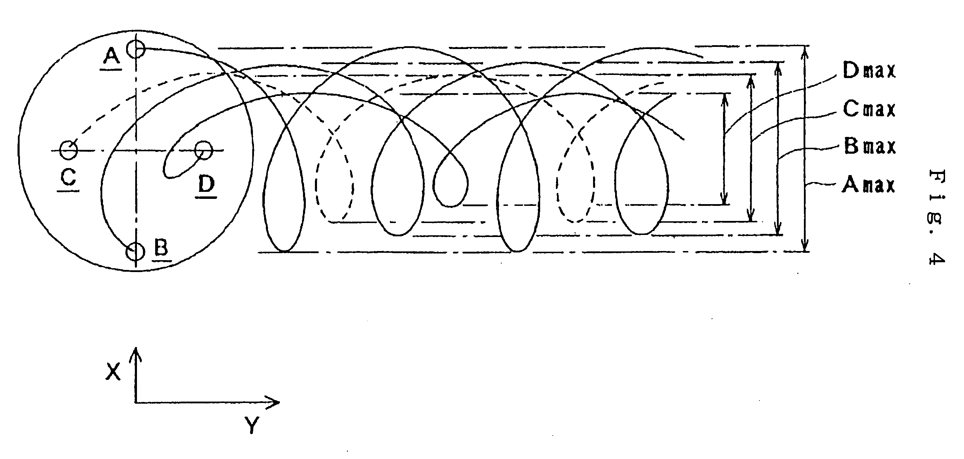

According to the present invention, when the surface of the composite molded article consisting of the inorganic particles and the resin is cut using the cutting device that includes such a nozzle head, the nozzle head is rotated to be moved in X and Y directions. In this case, as shown in, for example, Fig. 4, maximum widths Aₘₐₓ, Bₘₐₓ, Cₘₐₓ, and Dₘₐₓ of loci of nozzles A, B, C, and D following the rotation movement of the nozzles A, B, C, and D in the Y direction are determined according to arrangement positions of the respective nozzles. Preferably, therefore, the nozzles are arranged at positions different in distance from the rotation center of the nozzle head as much as possible, thereby making areas among the loci small and uniform. Further, by setting a movement pitch in the X direction to be small, the areas among the loci can be made smaller and more uniform.

The movement of the nozzle head may be either a continuous movement or a step-by-step movement.

For example, the instance of using the nozzle head in which the circumferential positions are divided to the six positions set forth above will be described. For this nozzle head, the following conditions are set.
A height of the nozzle from the surface of the composite molded article: 35 mm
A jet water pressure: 1,500 kgf/cm²
A Y-direction feeding velocity: 15,000 mm/min
An X-direction feeding velocity: 60 mm/min
The number of revolutions of the nozzle head: 750 rpm.

By satisfying these conditions, a PMAA resin matrix surface layer (at a thickness of 200 *µ*m) can be satisfactorily cut in all of the vertex portion, the flat portion, and the inclined portion of the irregular surface shape. If the conventional nozzle head having as many nozzles as those according to the present invention is employed, and it is set that a predetermined matrix surface layer can be cut in the flat portion, then the matrix surface layer in the inclined portion is hardly cut but left within the same time. If a setting is made that the water jet pressure is higher and the distance between each nozzle and the molded article is shorter so that the inclined portion is cut by a predetermined cutting thickness, then the flat portion is excessively cut.

Needless to say, the present invention is not limited to the embodiment, and various forms of the detailed parts of the invention can be adopted.

As described so far in detail, the present invention can solve the disadvantages of the conventional surface cutting means by the high pressure water jet, and effectively cut away the resin matrix surface layer in the inclined portion of the irregular surface shape or the relief design.

## Claims

1. A high pressure water jet surface cutting device that comprises a high pressure water jet nozzle head which can be moved in X and Y directions while being rotated, and that cuts a resin matrix portion on a surface of a composite molded article consisting of inorganic particles and a resin, wherein
a plurality of high pressure water jet nozzles are arranged on said nozzle head, high pressure water jet centers of at least one or more nozzles being arranged at inclined angles with respect to perpendicular positions to a foundation layer surface of said composite molded article, respectively.

2. The high pressure water jet surface cutting device according to claim 1, wherein
the inclined angles of the at least one or more nozzles are within a range of 45°.

3. The high pressure water jet surface cutting device according to claim 1 or 2, wherein
the at least one or more nozzles arranged at the inclined angles are at orthogonal positions to a tangent of the nozzle head to be directed outward of a rotation center of the nozzle head or directed inward toward the rotation center.

4. The high pressure water jet surface cutting device according to any one **of claims 1 to 3, wherein**
the at least one or more nozzles are arranged so that the jet centers are **at perpendicular positions at the inclined angles of 0° with respect to the** foundation layer surface.

5. The high pressure water jet surface cutting device according to any one of claims 1 to 4, wherein
the plurality of high pressure water jet nozzles are arranged at at least two or more circumferential positions having different distances from the rotation center of the nozzle head.

6. The high pressure water jet surface cutting device according to claim 5, wherein
the plurality of nozzles arranged at an equal circumferential position are arranged at symmetric positions about the rotation center of the nozzle head.

7. The high pressure water jet surface cutting device according to claim 5 or 6, wherein
the plurality of nozzles arranged at the equal circumferential position are arranged at the same inclined angle or equally perpendicularly, and form an equal arrangement angle with respect to a tangent.

8. The high pressure water jet surface cutting device according to any one of claims 5 to 7, wherein
the nozzles arranged at a plurality of circumferential positions, respectively, differ in inclined angle.

9. A surface cutting method using the surface cutting device according to any one of claims 1 to 8, comprising a step of:
cutting the resin matrix portion on the surface of the composite molded article while moving the nozzle head in the X and Y directions so that areas among loci of the jet centers with respect to the foundation layer surface of said composite molded article against which a jet water from the nozzles is stricken are uniform.

10. The cutting method according to claim 9, comprising a step of cutting away the resin matrix portion having a thickness within a range of 10 µm to 10 mm.

11. The cutting method according to claim 9 or 10, comprising a step of cutting the surface of the composite molded article that includes an irregular surface having a height from the foundation layer surface within a range of 1 to 100 mm.
